# EUROPÄISCHE PATENTANMELDUNG

(11) **EP 0 989 708 A2**
(43) Veröffentlichungstag der Anmeldung: **29.03.2000**
(21) Anmeldenummer: 98118549.9
(22) Anmeldetag: 01.10.1998
(51) Int. Cl.: H04L 29/06, H04L 29/10

(54) **System- und andwendungsübergreifendes Multifunktionszugangsmodul für digitale und analoge Datenübertragungen jegliche Art**

(30) Priorität: 21.09.1998 DE 19843270
(71) Anmelder: Micronik Computer Service Manfred Kotulla, 51379 Leverkusen (DE)
(72) Erfinder: Micronik Computer Service Manfred Kotulla, 51379 Leverkusen (DE)

(57) **Zusammenfassung**

**Stand der Technik**

Nach dem derzeitigen Stand der Technik sind Empfangs- und Wiedergabegeräte für digitale und analoge Datenübertragungen in sich geschlossene Systeme, die nicht den sich ändernden Anforderungen des Benutzers oder der technischen Weiterentwicklung angepaßt werden können. Vielmehr ist bei diesen Änderungen eine Neuanschaffung des Gerätes notwendig. Das neue System soll die modulare Erweiterbarkeit bestehender Geräte ermöglichen.

**Die Neuartigkeit der Technik**

Um den zwingenden Neuerwerb kompletter Geräte zu verhindern, wird das Multifunktionszugangsmodul eingesetzt. Dieses wird zwischen bestehendes Empfangsteil und Ausgabeteil implementiert und übt dort, je nach Anforderung des Benutzers, seine Funktion aus.
Möchte der Benutzer z.B. zusätzliche Datendienste in Anspruch nehmen, die erst nach Erwerb des Grundgerätes angeboten werden oder die einer anderen Sendenorm unterliegen, so tauscht er lediglich das Modul aus und setzt ein neues Multifunktionszugangsmodul ein, welches seinen neuen Wünschen gerecht wird.

## Beschreibung

### Beschreibung der Erfindung

Es ist bekannt, daß bei der Übertragung von Daten das Empfangs- oder Sendegerät je nach Art der zu übermittelnden Daten, je nach Sende-/Empfangsnorm, je nach Art der Codierung, Adressierung und Komprimierung der Daten diesen Unterschieden gerecht werden muß. Dieses wird dadurch erreicht daß es für die unterschiedlichen Anforderungen unterschiedliche Geräte gibt. Bei Computersystemen besteht dieses Gerät aus verschiedenen Komponenten. Diese Komponenten lassen sich durch vorgenannte Erfindung ebenfalls modular ergänzen bzw. erweitern.

Ändert sich einer der vorgenannten Punkte, ist dementsprechend das Gerät komplett auszutauschen.
Da Sende- und Empfangsnormen international nicht einheitlich sind, ist der Austausch des Gerätes z.B. bei einem Ortswechsel nötig.
Vorgenannte Normen unterliegen zudem einer kontinuierlichen Anpassung, Änderung und Weiterentwicklung, welche ebenso eine weitere Nutzung des bisherigen Sende-/ Empfangsgerätes verbieten.
Weiterhin wird der Austausch des Gerätes notwendig, wenn der Benutzer zusätzliche Datenanwendungen einsetzen möchte, die entweder neuartig oder beim Erwerb des bisherigen Gerätes nicht vom Benutzer vorgesehen waren. Der Benutzer hat hier noch die Möglichkeit durch ein zweites Gerät, welches eine Ergänzung zum im Besitz befindlichen Gerätes darstellt, sein System zu erweitern. Die Hinzunahme von weiteren Geräten führt in der Praxis zu einem erhöhten Aufwand hinsichtlich der Verbindung der Geräte untereinander und der Verbindung der Datenquelle(n) mit den einzelnen Geräten.
Ändert der Anbieter oder Empfänger der Daten seine technische Plattform, so zieht dies auch einen Austausch des Gerätes beim Anwender nach sich.

In allen diesen Fällen hat der vollständige Ersatz des bisherigen Gerätes oder der Erwerb eines zusätzlichen Gerätes zu erfolgen.

Dies hat zur Folge, daß dem Anwender erhebliche Kosten und erhöhter Aufwand in bezug auf die Handhabung unterschiedlicher Geräte entstehen. Beim notwendigen Ersatz wird zudem eine Entsorgung des Altgerätes nötig, was als ökologisch bedenklich einzustufen ist. Der ständige Erwerb kompletter Neugeräte ist dem sparsamen Umgang mit den Ressourcen nicht zuträglich. Die Sicherheit der Datenübertragung nimmt mit der Anzahl der unterschiedlichen an der Datenübermittlung beteiligten Geräte ab, was im ungünstigsten Fall zum Verlust der Sende- oder Empfangsmöglichkeit führen kann.

Der neuartigen Erfindung liegt die Aufgabe zu Grunde, eine unter datensicherheitstechnischen, ökologischen, kosteneffektiven und handhabungsfreundlichen Aspekten größtmögliche Ausbaufähigkeit bzw. Zukunftssicherheit eines Sende- / Empfangsgerätes zu gewährleisten.

Die Neuartigkeit besteht im modularen Aufbau des Sende- oder Empfangsgerätes und seiner daraus resultierenden Anpassungsfähigkeit an sich ändernde Umgebungs- und Anforderungsbedingungen. Der Datenstrom einer beliebigen Datenquelle wird über das Modul in die eigentliche Ausgabeeinheit geführt. Ändern sich nun einige oder alle der o.g. Parameter, so ist ein Austausch des Moduls möglich, welches den Änderungen Rechnung trägt. Die Ausgabeeinheit arbeitet demnach unabhängig von den Änderungen oder Anforderungen des eigentlichen Datenstroms. Durch den modularen Wechsel besteht die Gelegenheit ein bestehendes Gerät zu ergänzen, zu modifizieren oder zu erneuern. Der Modulcharakter birgt die Möglichkeit, durch Austausch auch zukünftigen technischen Entwicklungen gerecht zu werden. Die Gestaltung der Module ist derart, daß der Benutzer einen Wechsel vornehmen kann, ohne das eigentliche Gerät aufschrauben zu müssen oder sonstiges Werkzeug zur Hand nehmen. Das Modul ist demnach nicht fest bzw. dauerhaft mit dem Grundgerät verbunden. Bei Computersystemen sind die Module leicht einzubauen.
Die Module werden in den unterschiedlichsten Ausführungen hergestellt Sie tragen der Vielzahl von Zielanforderungen Rechnung. Die verschiedenen Modularten selber können je nach Anforderung der Sende- / Empfangsparameter oder nach individuellen Wünschen des Benutzers erstellt werden. Demzufolge ist eine Anpassung bei auftretenden technischen Änderungen oder geänderten Marktanforderungen möglich, indem nur das Modul, nicht das komplette Gerät gewechselt wird.
Hieraus resultiert für den Benutzer eine zukunftssichere Investition, da das Grundgerät immer erhalten bleibt Die Handhabung und ergonomische Bedienbarkeit erhöht sich, da nur ein Gerät zu bedienen ist, welches allen Anforderungen gerecht wird. Die Verbindung von unterschiedlichen Geräten, die den jeweils unterschiedlichen Anforderungen gerecht werden, entfällt, hierdurch erhöht sich zudem die Datenübertragungssicherheit. Eine umweltbelastende Entsorgung entfällt ebenso wie die ständige ressourcenbelastende Neuproduktion kompletter Geräte. Der Aufbau der Module an sich ist so gestaltet, daß sich die Module technologisch aufrüsten lassen und demnach nicht entsorgt werden müssen. Bestimmte Module, die den Bedürfnissen des Benutzers nicht mehr gerecht werden, z. B. durch einen Ortswechsel, lassen sich an einen anderen Benutzer ohne erneuten Eingriff (ohne Nachrüstung) weitergeben. Hierdurch steigt die Lebensdauer der Module durch Mehrfachnutzung erheblich an.

### Darstellung der Erfindung

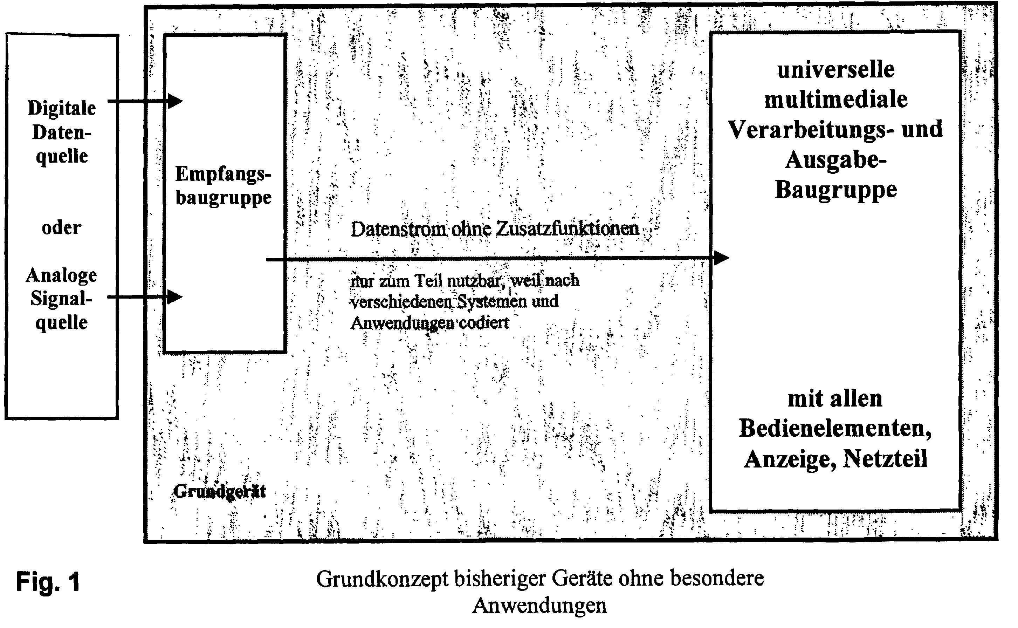

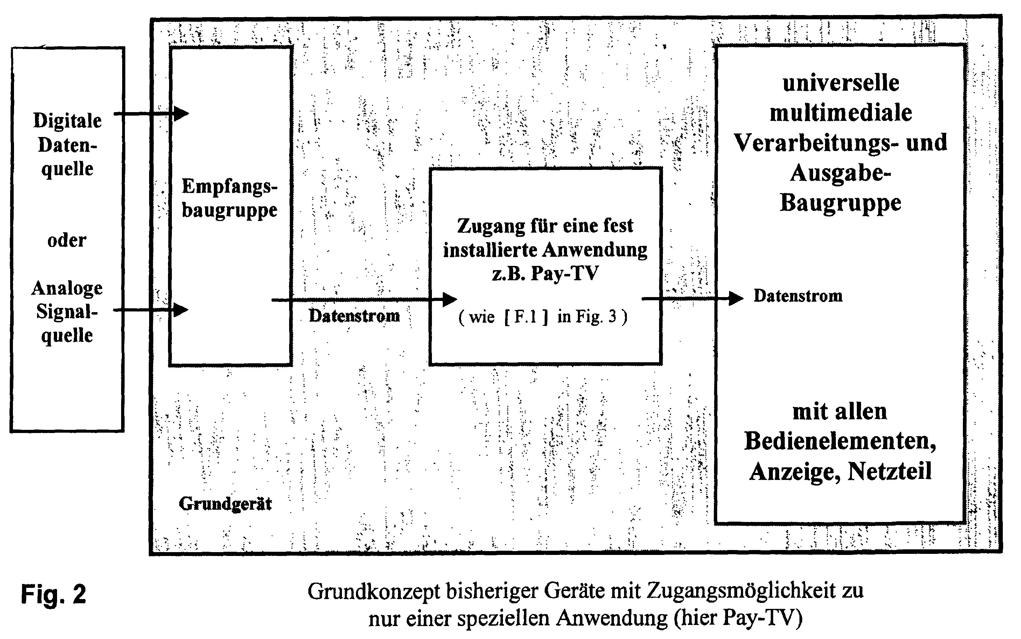

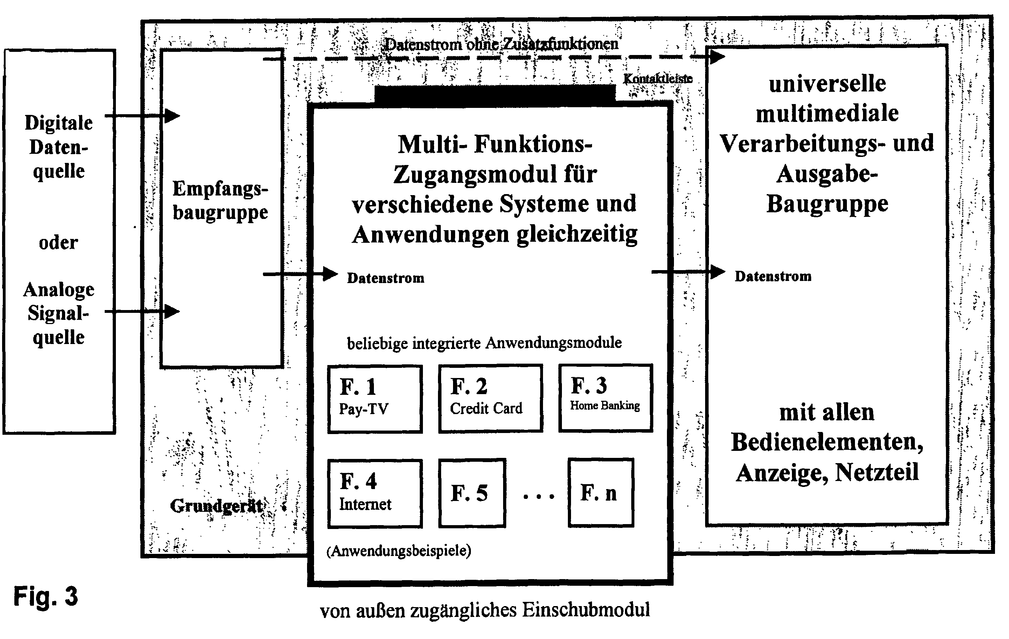

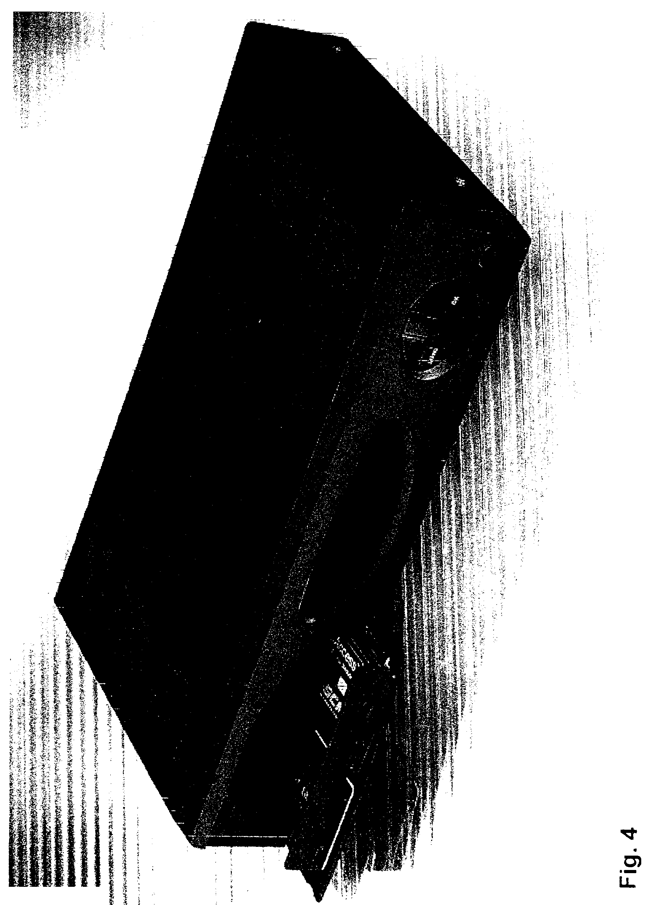

**Fig. 1:** Zeigt das Grundkonzept bisheriger Geräte ohne besondere Anwendungen.
**Abb. 2:**
   Zeigt die bisherige Variante (Stand der Technik) mit Zugangsmöglichkeit zu nur einer speziellen Anwendung (hier Pay-TV); nicht austauschbar; fest installiert.
**Fig. 3:**
   Zeigt das Grundkonzept des Modulsystems mit Zugangsmöglichkeiten auf einem einzigen Modul zu beliebig vielen Anwendungen und Anforderungen; austauschbar; nicht fest installiert.
**Fig 4:**
   Zeigt das Beispiel des modularen Systems mit verschiedenen Anwendungen anhand eines digitalen Satellitenreceivers.

## Patentansprüche

1. System- und anwendungsübergreifendes Multifunktionszugangsmodul für digitale und analoge Datenübertragungen jeglicher Art, dadurch gekennzeichnet, daß das Modul austauschbar gestaltet ist und durch das Modul gleichzeitig der Zugang zu verschiedenen Datendiensten und -paketen geöffnet wird, die aus unterschiedlichen Datenquellen kommen können, verschiedenartig verschlüsselt sein können, uneinheitlich komprimiert, adressiert oder normiert sein können sowie für beliebig viele Anwendungen bestimmt sein können.

2. Multifunktionszugangsmodul nach Schutzanspruch 1, dadurch gekennzeichnet, daß in Computersystemen bestehende Datenempfangs- und Ausgabekomponenten dahingehend durch das Modul ergänzt bzw. erweitert werden, daß das Modul austauschbar gestaltet ist und durch das Modul gleichzeitig der Zugang zu verschiedenen Datendiensten und -paketen geöffnet wird, die aus unterschiedlichen Datenquellen kommen können, verschiedenartig verschlüsselt sein können, uneinheitlich komprimiert, adressiert oder normiert sein können sowie für beliebig viele Anwendungen bestimmt sein können.

3. Multifunktionszugangsmodul nach Schutzanspruch 1, dadurch gekennzeichnet, daß das Modul in bestehende Ausgabegeräte integriert werden kann und das Modul austauschbar gestaltet ist und durch das Modul gleichzeitig der Zugang zu verschiedenen Datendiensten und -paketen geöffnet wird, die aus unterschiedlichen Datenquellen kommen können, verschiedenartig verschlüsselt sein können, uneinheitlich komprimiert, adressiert oder normiert sein können sowie für beliebig viele Anwendungen bestimmt sein können.
